# EUROPEAN PATENT APPLICATION

(11) **EP 4 417 922 A1**
(43) Date of publication of application: **21.08.2024**
(21) Application number: 23382145.3
(22) Date of filing: 15.02.2023
(51) Int. Cl.: F28F 1/02, F28F 9/02, F28D 1/047

(54) **HEAT EXCHANGE TUBE**

(71) Applicant: BORGWARNER EMISSIONS SYSTEMS SPAIN, S.L.U., 36315 Vigo Pontevedra (ES)
(72) Inventor: CARBALLIDO, Román, E-36205 Vigo, Pontevedra (ES); FONTÁN MARTINEZ, Lidia María, E-36204 Vigo, Pontevedra (ES); MARIÑO, Eloy, E-36205 Vigo, Pontevedra (ES); ENRIQUEZ, Victor, E-36209 Vigo, Pontevedra (ES); LÓPEZ, Enrique, E-36203 Vigo, Pontevedra (ES); HERMIDA, Xoan, E-36380 Gondomar, Pontevedra (ES)
(74) Representative: ABG Intellectual Property Law, S.L.

(57) **Abstract**

A first aspect of the invention is a heat exchange tube configured to carry out the cooling of an electrical or electronic element by making use of a "U" flow, that is, with an outflow and a return flow such that the supply and outlet of the fluid are located at one end of the tube. The tube is additionally configured to establish a suitable coupling to a manifold so that the junction ensures that there is no bypass flow between the flow channel(s) and the return flow channel(s). A second aspect of the invention is a manifold configured for coupling with the tube of the first aspect of the invention. A third aspect of the invention is a heat exchange module which at least combines a tube according to the first aspect of the invention and a collector according to the second aspect of the invention.

## Description

### OBJECT OF THE INVENTION

A first aspect of the invention is a heat exchange tube configured to carry out the cooling of an electrical or electronic element by making use of a "U" flow, that is, with an outflow and a return flow such that the supply and outlet of the fluid are located at one end of the tube.

The tube is additionally configured to establish a suitable coupling to a manifold so that the junction ensures that there is no bypass flow between the flow channel(s) and the return flow channel(s).

A second aspect of the invention is a manifold configured for coupling with the tube of the first aspect of the invention. The design of the manifold makes it possible to ensure fabrication requiring a reduced number of steps, using sheet metal stamping and bending techniques, and which ensures the absence of cross flows between the feed and return of a double channel tube for use in a "U" configuration.

A third aspect of the invention is a heat exchange module which at least combines a tube according to the first aspect of the invention and a collector according to the second aspect of the invention. This module allows by stacking to constitute a heat exchanger formed by a plurality of modules suitable for the heat exchange of a battery of cells.

### BACKGROUND OF THE INVENTION

The electric vehicle and its growing demand give rise to a set of new technical challenges that require effective solutions, especially in all aspects related to energy storage.

Among other challenges, the use of batteries to store electrical energy requires control techniques to optimize the charging and discharging of the cells to extend their useful life as much as possible.

However, an equally or more important aspect than load management in a set of cells is the operating temperature that they must maintain both in use and in storage conditions. In use conditions, the cells generate heat that must be dissipated so that their temperature does not rise excessively, degrading parts of the cells or their environment, or even avoiding the melting of some of their parts or deflagration. In storage conditions the external temperature can become very low causing the cells to reach temperatures at which their performance drops drastically or even stop working, preventing recharging due to a drastic rise in internal impedance.

In the first case it is necessary to remove the heat generated and in the second case it is necessary to provide heat to prevent the temperature from dropping below the minimum operating temperature.

In both cases it is necessary to exchange heat with each of the cells with an external heat source or heat sink. In most cases it is necessary to interpose heat exchange tubes in contact with the cells so that a cooling liquid acts as a transport vehicle for the heat exchanged with the cell.

The use of flat heat exchange tubes is an effective solution because it allows to adapt to the shape of the cells, for example when they are of prismatic configuration. The same is true for cylindrical cells if the tube has curved sections that are close to the cell surface to maximize the contact region.

Hereinafter, a flat tube is considered to be a tube whose configuration according to a cross-section extends along a trajectory, preferably straight. That is, the tube extends essentially in two dimensions, a longitudinal dimension and a transverse dimension, with a small thickness compared to either of the two main dimensions.

The transverse path allows to generate a ruled surface where the cross section is a preferably straight guideline and the surface is generated by the displacement of the guideline along two generatrices spaced from each other on which the guideline is supported. The generatrices can be straight or even sinuous for example giving rise to a wavy surface capable of adapting to cylindrical surfaces located on either side of the flat tube having the shape of the generated surface. That is, the flat tube has as its mean principal surface the one generated as described above. A specific case of flat tube is the one showing a straight or sinuous band shape.

Preferably, the thickness of the flat tube is at least one order of magnitude smaller than the length of the transverse path; that is, than the width of the tube.

If the generatrices are straight then the flat tube is bounded mainly by two parallel planes.

When the flow supply and flow return of the flat tube should be located on the same side of the tube then it is necessary to establish at least one flow channel and one return channel so that, through a manifold located at the opposite end to the supply and outlet, it is possible to communicate both channels causing a flow with a "U" trajectory. In addition, the manifold that allows the input and output must also differentiate in its connection between the input channel(s) and the output channel(s).

It is said one or more inlet channels or, one or more outlet or return channels because the flow conduit and the outlet or return conduit in some embodiments are formed by a plurality of channels arranged parallel such that the flow rate in one conduit is the sum of the flow rates in the channels forming that conduit.

The invention according to a first inventive aspect has a configuration that avoids the problem of an accidental communication between the flow conduit and the return conduit by the configuration of the connection and not by the conduit used to establish the flow to be followed by the coolant. This configuration of the tube according to the first inventive aspect is complemented by the manifold design according to the second inventive aspect so that the junction solution prevents a bypass flow where this barrier to accidental flows is achieved after their mutual coupling and junction. By "bypass" is meant an alternative fluidic path or communication to the main path and of shorter distance.

This differentiated connection is especially relevant in the supply and outlet of the return flow in the flat tube since the supply of a tube with a "U" flow configuration, if the coolant finds a passage that allows it to bypass the tube, this bypass offers a lower hydraulic resistance so that a flow of coolant is established through the bypass avoiding the passage through the tube. This flow that does not pass through the tube is a flow of liquid that ceases to fulfill its function reducing the overall performance of the tube.

### DESCRIPTION OF THE INVENTION

A first aspect of the invention is a heat exchange tube suitable for cooling or heating battery cells by allowing the passage of a cooling liquid through its interior for transporting the heat exchanged between the tube and the element to be heated or cooled.

The heat exchange tube comprises:
- *a first conduit with a flat configuration according* to *its cross section;*
- *a second conduit with a flat configuration according* to *its cross section;*
*wherein the first conduit and the second conduit are arranged adjacent to each other and mechanically joined by means of an intermediate section configuring a tube of planar configuration according* to *its cross section wherein the tube extends longitudinally between a first end and a second end according to a trajectory.*

The tube has two conduits, the first conduit and the second conduit, allowing the passage of two differentiated flows, the outflow and the return flow respectively.

According to the configuration of the tube, the two conduits are separated by the presence of an intermediate section that keeps the first conduit and the second conduit adjacent and joined.

The "U" flow configuration is due to the fact that the outgoing flow introduced into the first conduit at the first end of the tube reaches the second end and is redirected to the second conduit to return again from the second end of the tube to the first end. The flow path is therefore "U" shaped.

The flow at the second end of the tube, according to a preferred example of the invention, is redirected from the first conduit to the second conduit through a manifold that fluidically communicates both conduits.

The tube follows a path which in preferred examples is either straight or corrugated with curved sections. The shape of the tube is such that it conforms to the shape of the cells or elements with which heat is to be exchanged favoring intimate contact and thus favoring heat transfer by conduction.

According to this first inventive aspect *at least one end of the tube has a configuration adapted to be attached to a manifold that is configured to exchange fluid with the first conduit and with the second conduit, wherein:*
- *the intermediate section has its end recessed from an end of the first conduit and recessed from an end of the second conduit such that the end of the first conduit and the end of the second conduit have a perimeter area separated from the end of the intermediate section and configured for connection to the manifold.*

The configuration of one end of the tube intended to join with a manifold shows the intermediate section recessed with respect to both the first conduit and the second conduit; that is, the first conduit and the second conduit project beyond the intermediate section thus generating two projections.

Each of these projected portions is separate and supports a differentiated joint without any leakage of coolant resulting in fluid exchange between the first conduit and the second conduit.

According to an example embodiment, *the perimeter area is continuous along a perimeter path.*

The portions of the first conduit and of the second conduit projecting beyond the intermediate section show, each of them, a perimeter area which, according to this example of realization is free of interruptions admitting a continuous contact at least along a perimeter trajectory contained in the perimeter area with an antagonistic or complementary surface of the manifold with which it is joined. That is, it is possible to establish a closed path with this area destined to the junction thus avoiding fluid leakage let alone communication between the first conduit and the second conduit.

In the above cases, the perimeter area is an area located on the outer surface of the tube.

According to an example embodiment applicable to any of the examples described above, *the tube path is either straight or wavy.*

A straight trajectory, when the cross section is also straight, allows for example a good contact with prismatic cells since the lateral surfaces of the tube are flat.

When the trajectory is wavy the tube shows an alternation between a section with a concave curvature towards one side of the tube and then a section with the concave curvature towards the other side so that the tube has the ability to girdle the cylindrical surface of cells which are arranged alternately on one and the other side of the tube. This arrangement is suitable in cells with a high degree of packing between those between which the tube extends and those with which they exchange heat.

According to an exemplary embodiment applicable to any of the examples described above, *wherein the first conduit, the second conduit or both conduits comprise a plurality of internal channels.*

When a conduit, the first conduit or the second conduit, has a large width, the aspect ratio is very high and can result in tube surfaces that, when subjected to perpendicular force, do not have sufficient strength.

A first situation where the tube receives perpendicular stresses is during manufacturing if the tube is subjected to a bending or stamping operation. This is the case in the manufacture of a corrugated flat tube when it is obtained from a straight flat tube manufactured for example by extrusion. The flat tube is subjected to a deformation force, for example imposed by two forms placed in opposition and having the corrugated shape. The deformation force applied perpendicularly on a tube without a plurality of channels would cause the collapse of the conduit by strangling its section. On the contrary, the presence of a plurality of channels separated by internal walls gives rise to a conduit with longitudinal reinforcements that structurally connect the conduit walls on one side and the other side of the tube giving rise to a structural reinforcement. This reinforcement is able to support these deformation stresses applied mainly in a direction essentially perpendicular to the surface of the tube.

A second technical effect resulting from the use of a plurality of internal channels is the resistance of the tube to deformations due to pressure differences between the inside and outside of the tube. For example, if the tube is subjected to a pressure higher than the external pressure, the internal walls separating the internal channels prevent the expansion of the walls as would occur if the internal channels were not present.

According to an exemplary embodiment applicable to any of the examples described above, wherein *the first conduit, the second conduit or both conduits have a cross-section bounded by two parallel straight lines separated from each other and connected at their ends by two curved sections.*

A cross section delimited by two parallel straight lines allows a suitable contact in prismatic bodies when the longitudinal path of the tube is straight or, in curved bodies such as cylindrical ones when the longitudinal path of the tube is wavy. In this case the mean surface that defines the shape of the tube is ruled where the directrix is straight.

The curved ends avoid the presence of edges which, in an environment where potential differences are high, could generate discharge arcs causing damage to the battery or to some of the cells. These arcs could even cause the metal to melt somewhere in the battery and in particular in the conduits of the tube, releasing the coolant in this environment with high electrical potentials with the danger that this entails.

A second inventive aspect is a manifold suitable for connecting to a tube having two conduits according to any of the examples described above.

The collector comprises:
- *at least one chamber with a first opening with the inner surface configured to embrace the first conduit of the tube establishing contact throughout the perimeter area of the end of said first conduit,*
- *at least one chamber with a second opening with the inner surface configured to embrace the second conduit establishing contact throughout the perimeter area of the end of said second conduit.*

The manifold is an intermediate piece that allows fluidic connection between one or more coolant supply and return lines and the heat exchange tube configured as any of the examples of the first inventive aspect.

The manifold has a first opening wherein the inner surface is configured to embrace the first conduit of the tube, in particular in the perimeter area of the end of the first conduit. The same is true for a second opening configured to embrace the second conduit of the tube. By embracing the perimeter area, two closed joint surfaces are established on one and the other conduit which are disjoint since the intermediate section distances them and, at the same time, being recessed allows no interference between said perimeter areas both on the tube and on the inner surface configured to embrace said area.

In this way, the collector avoids the existence of a baypass flow between the first conduit and the second conduit of the same tube.

In an example of realization the manifold is the manifold that is located at one end and that allows to put in communication the first conduit with the second conduit to achieve a "U" flow. In this case the chamber with a first opening and the chamber with a second opening are the same. That is, a single chamber that is in communication with the first and the second opening.

The independence of joints, although a bypass flow is not relevant in this case because precisely the chamber serves as a bypass between the first conduit and the second conduit, it is important because it ensures a secure connection with each of the conduits avoiding leaks that would come out to an environment with high electrical potentials where there can be no loose liquids.

According to a different example of a more specific embodiment of the collector, the *chamber with a first opening is a first chamber and the chamber with a second opening is a second chamber, the first chamber and the second chamber being fluidly incommunicable with each other and wherein:*
- *the first chamber is in communication with a first supply*/*return line and,*
- *the second chamber is in fluidic communication with a second return*/*feed line.*

Each of the openings is in communication with a different chamber where in turn, the first chamber is the one in fluidic communication with one line and, the second chamber is the one in fluidic communication with another different line; for example, the feed line and the return line respectively. With this configuration the fluidic communication between the feed line and one conduit of the tube is ensured to be totally independent of the fluidic communication between the other return line and the other conduit of the tube. That is, it is ensured that the totality of the flow with which the tube is fed follows a "U" trajectory arriving at the end of the tube without the appearance of bypass flows.

According to a more specific example of the above example, *the main body of the manifold is configured in stamped sheet metal according to a first stamped part and a second stamped part where in the first part is configured:*
- *part of the first opening and part of the inner surface that is configured to be in contact with the perimeter area of the end of the first conduit and,*
- *part of the second opening and part of the inner surface that is configured to be in contact with the perimeter area of the end of the second conduit;*
   *and in the second piece it is configured:*
- *part of the first opening and part of the inner surface that is configured to be in contact with the perimeter area of the end of the first conduit and,*
- *part of the second opening and part of the inner surface that is configured to be in contact with the perimeter area of the end of the second conduit.*

The manifold according to this embodiment example is formed by coupling and joining the first piece and the second stamped piece where in particular the first opening and the second opening as well as the inner surfaces which are configured to join the perimeter area of the first conduit and the second conduit are formed by the two pieces; that is, part belongs to one piece and part to the other piece.

With this configuration it is possible to build a manifold with its chambers in such a way that, being a complex part, it can be built by stamping which results in a very fast manufacturing, with little subsequent mechanical work and reliable.

According to a more specific embodiment of the above example, *between the first chamber and the second chamber there is a section where the first piece and the second piece are joined by a chamber-free or expanded section.*

The first chamber and the second chamber are formed by expansion formed in the stamping of the first and second parts. That is, the first part and the second part are in contact in an area surrounding the first chamber and in an area surrounding the second chamber. Thus, between the first chamber and the second chamber there is a gap free of chambers or expansions that cause the chambers to be spaced apart. This allows the first opening and the second opening to also be separated and to connect to the first conduit and the second conduit without fluidic passages resulting in a bypass flow.

According to an example of realization applicable to the last two examples described, *the first piece and the second piece are made of "cladding sheet", preferably of aluminum alloy, and joined by partial melting in a furnace.*

The first piece and the second piece are preferably made of sheet metal and, in this example of realization of "cladding sheet"; that is, the sheet metal is formed by a first metal with a certain melting temperature accessible from one of its faces and, a second metal with a lower melting temperature than the first metal accessible from the opposite face. For example, the first metal is aluminum and the second metal is an aluminum alloyed in such a way that its melting temperature is lower.

In this example of realization the two parts made of "cladding sheet" are configured so that the faces or surfaces with lower melting temperature are in contact. When both parts, already in contact, are placed in a furnace at a temperature above the lower melting temperature but below the higher melting temperature, only the melting of the metal in contact on one part and on the other is achieved while maintaining the overall shape of the part. In this case the melting of the surfaces in contact results in their joining which is final once the part has cooled.

According to another exemplary embodiment of the invention applicable to any of the described examples, the first piece and the second piece are joined by adhesive.

According to an example embodiment of the manifold applicable to any of the described examples of the manifold formed by two pieces, *the stamping of the first piece and the second piece is with plastic deformation such that the joint between the two pieces in a region of the inner surface which is configured to be in contact with the perimeter area of the first conduit or the second conduit such that the radius of agreement of one and the other piece is less than lmm, more preferably less than 0.5mm, more preferably less than 0.2mm, more preferably less than 0.1mm.*

The stamping process deforms an initially flat sheet into a part with shapes that are generated by bending and with permanent deformations. The bending is not pure but combined, for example when chambers such as the first chamber or the second chamber are generated. These deformations result in expansion or changes in slope.

According to the example embodiment based on the combination of two stamped parts, each part has part of the first opening and part of the second opening. In this part of the opening there is a transition from a surface intended to contact the other part and a surface intended to contact the perimeter area of the conduit. However, as they are contacts with different parts the stamping process generates radii of agreement limited by the bending capacity of the material.

In any of the embodiments of the invention there are two types of joints, a first type of joint between the first piece and the second piece and a second type of joint between three pieces, the first piece, the second piece and also the conduit.

In the first type of joint the first piece and the second piece comprise an area that is in contact, preferably flat, which allows the joint of one with the other without leakage of coolant.

In the second type of joint, there are joint surfaces where the joint is between two pieces: between the first piece and the second piece, between the first piece and the conduit and also between the second piece and the conduit. These three joints are established in separation surfaces between parts that converge along an area where it is more difficult to ensure tightness. This area is the area that runs along the longitudinal direction adjacent to the area of the duct section that is adapted to join the manifold.

The first piece and the second piece are joined up to this zone where, according to a cross section to the tube they separate to extend into two different joining surfaces, the joint between the first piece and the conduit and, the joint between the second piece and the conduit.

The separation is established by the bending or deformation of the first piece and the bending or deformation of the second piece. When these bends exist for example by a forming by a stamping process the radius of agreement are high and give rise to a channel which is where the coolant leakage occurs.

This channel can be occluded by brazing paste or by melting the "cladding sheet" flux layer. However, if occlusion does not occur due to insufficient melted material, sealing is not ensured.

According to an exemplary embodiment, the region of the first part and the second part in which these radius of agreement are established is treated with a second stamping step in which the deformation of the material reduces the radius of agreement. An exemplary embodiment includes inserts and movable elements in the stamping die to carry out this second localized deformation action.

According to an exemplary embodiment applicable to any of the described examples of a two-piece manifold, *the first piece and the second piece are joined together:*
- *by "clinching" or punching with permanent deformation;*
- *by tabs emerging from one piece and bent towards the other piece or,*
- *for both.*

Although the main connection between the two parts is preferably by welding, e.g. by cladding or brazing, before entering the furnace both parts must already be clamped with retaining means that ensure the relative position in a stable manner even during partial melting of the weld material.

A specific mode is "clinching" used from the English term "clinch" where a punch permanently deforms the material of the two stamped parts causing part of the material from one part to penetrate the other. That is, the punch causes a displacement of material into the other piece that receives it, forming a cavity. Since the material of the first part does not separate, a permanent bond is established that is very stable even after welding.

A third aspect of the invention is a heat exchange module. The module comprises:
- *a heat exchange tube according to any one of the exemplary embodiments of the first inventive aspect;*
- *a collector according to any one of the exemplary embodiments of the second inventive aspect;*
   *where*
- *the perimeter area of the first tube conduit is attached to an internal area of the first manifold opening;*
- *the perimeter area of the second tube conduit is attached to an internal area of the second manifold opening.*

The stacked union of modules, these connected through a supply line feeding coolant to the first chambers of the collector and a return line receiving coolant from the second chambers of the collector, allows the construction of a heat exchanger suitable for exchanging heat with a plurality of cells of a battery; in particular it can configure a single exchanger for all the cells of the battery. According to other examples one module is configured to exchange heat with a first group of cells of the battery and a second module is configured to exchange heat with a second group of cells.

A fourth aspect of the invention is a method of manufacturing a manifold comprising the following steps:
- stamping a first piece and a second piece configured according to any of the described examples, wherein either this first piece, or the second piece or both comprising tabs;
- place the first piece and the second piece together in their final position;
- bend the tabs holding the pieces together while the first tube conduit inserted in the first opening of the manifold and the second tube conduit inserted in the second opening are in their final position for joining the two pieces and the tube temporarily;
- optionally carry out clinching between the parts;
- subjecting the joined parts temporarily to temperature for a period time, the melting temperature of the flux material, either by a layer of a cladding sheet or by the addition of brazing paste, until soldering is established on the joined parts.

### DESCRIPTION OF THE DRAWINGS

These and other features and advantages of the invention, will become more clearly apparent from the following detailed description of a preferred form of embodiment, given solely by way of illustrative and non-limiting example, with reference to the accompanying figures.
- Figure 1: This figure shows an example embodiment in perspective of a heat exchange tube according to the first aspect of the invention.
- Figure 2: This figure shows an example realization of the exchange tube of the example realization seen in the previous figure coupled to an example realization of a manifold according to the second aspect of the invention. The view is in perspective.
- Figure 3: This figure shows the examples of the previous figure where in the manifold, formed by two pieces, the piece that was shown in the upper position in the view of the previous figure has been eliminated to have visual access to the junction between the tube and the manifold.
- Figure 4: This figure shows the same joint as in the previous figure but with a higher degree of magnification to allow the details of the joint to be observed.
- Figure 5a: This figure shows in exploded perspective a first part and a second part that configure the manifold shown in figures 2 and following to allow observing the internal details as well as the joining means between both parts and the means of union with the tube.
- Figure 5b: This figure also shows in perspective the manifold formed with the two pieces shown in Figure 5a joined together.
- Figure 6a: This figure shows the manifold in elevation with the openings that receive the two conduits of the tube so that both are fluidically isolated.
- Figure 6b: This figure shows the tube in elevation with the conduits projected in correspondence with the openings of the collector.

### DETAILED DESCRIPTION OF THE INVENTION

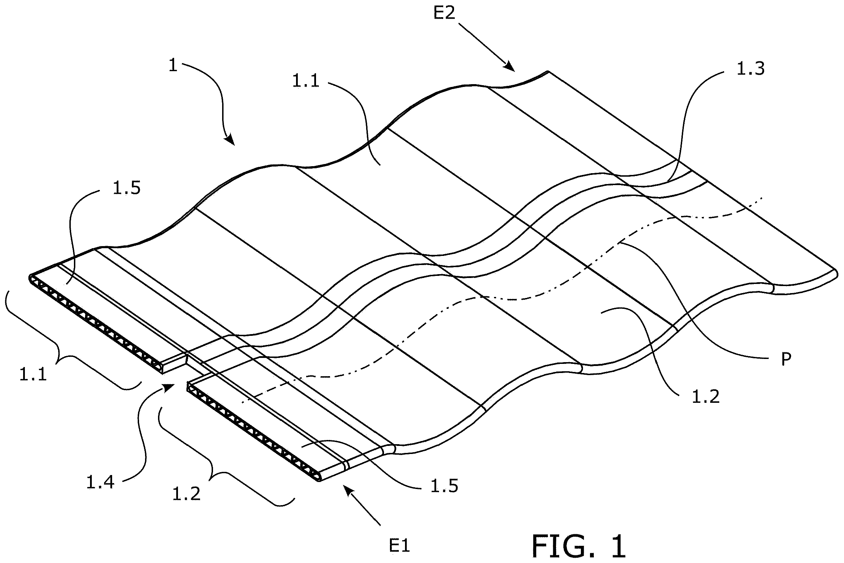

The present invention, according to the first inventive aspect, is a tube (1) for heat exchange. Figure 1 shows in perspective a specific example of a heat exchange tube (1) intended for cooling a plurality of battery cells.

In this figure 1 only part of its length is shown, although a first end (E1) and a second end (E2) are identified. The tube extends in a longitudinal direction following a wavy trajectory (P). The corrugated trajectory allows the tube (1) to alternately show a concave part that adapts to part of a cylindrical surface of the cells on which it alternately rests.

The configuration of the tube according to this example of realization we will call it flat since the thickness of the tube is significantly less than the transverse dimension and, of course, than the longitudinal dimension. Even if the thickness were variable in some of its parts, if the thickness is significantly less than the transverse dimension and extends longitudinally, it would still be considered flat.

The heat exchange tube (1) is formed by two conduits, a first conduit (1.1) and a second conduit (1.2), both extended according to the path (P) separated by an intermediate section (1.3) in this realization example the intermediate section (1.3) has a plate configuration of the same thickness as the first and second conduit (1.1, 1.2) which gives continuity to the flat corrugated band shaped surface configuration of the tube (1). However, according to another example of realization the thickness of the intermediate section (1.3) is of lesser thickness than both conduits (1.1, 1.2) reducing the amount of material and likewise maintaining exposed the outer surfaces of the conduits (1.1, 1.2) with the battery cells to establish the flow exchanged by conduction.

The tube (1) according to a first aspect of the invention and in particular those described below as examples of realization allows to establish a junction with a manifold (2) of supply that establishes a separate supply in the first conduit (1.1) and receives the return fluid returning through the second conduit (1.2). At the end of the tube (1) there is a "U" manifold, that is, which puts in communication the first conduit (1.1) and the second conduit (1.2) so that the outgoing flow from the first conduit (1.1) enters entirely in the second conduit (1.2) giving rise to an overall configuration of the flow in the tube (1) in a "U" shape.

On the left of Figure 1 is shown the first end (E1) of the tube (1) where the first conduit (1.1) and the second conduit (1.2) project with a greater length than the intermediate section (1.3) resulting in a recessed space (1.4).

This recessed space (1.4) also allows the end sections of the first conduit (1.1) and the second conduit (1.2) to have a perimeter area (1.5) where the perimeter area (1.5) of the first conduit (1.1) and the perimeter area (1.5) of the second conduit (1.2) are disconnected. Since this perimeter area (1.5) is the area that establishes the seal with the inner surface of an opening of the manifold (2) the junction is also disconnected preventing that if one of the junctions leaks the leaked fluid reaches the other conduit.

In this example of realization, although not essential, the first conduit (1.1) and the second conduit (1.2) are formed by a plurality of channels arranged consecutively distributed aligned according to a cross section. In this example embodiment where the first conduit (1.1) and the second conduit (1.2) comprise a plurality of channels, the separation between channels establishes a structural reinforcement between the connecting walls. This structural reinforcement for example prevents the first conduit (1.1) and the second conduit (1.2) from collapsing under deformation stresses applied perpendicularly to the tube (1) to achieve a corrugated configuration or, also prevents expansion of the tube (1) when subjected to high internal pressures.

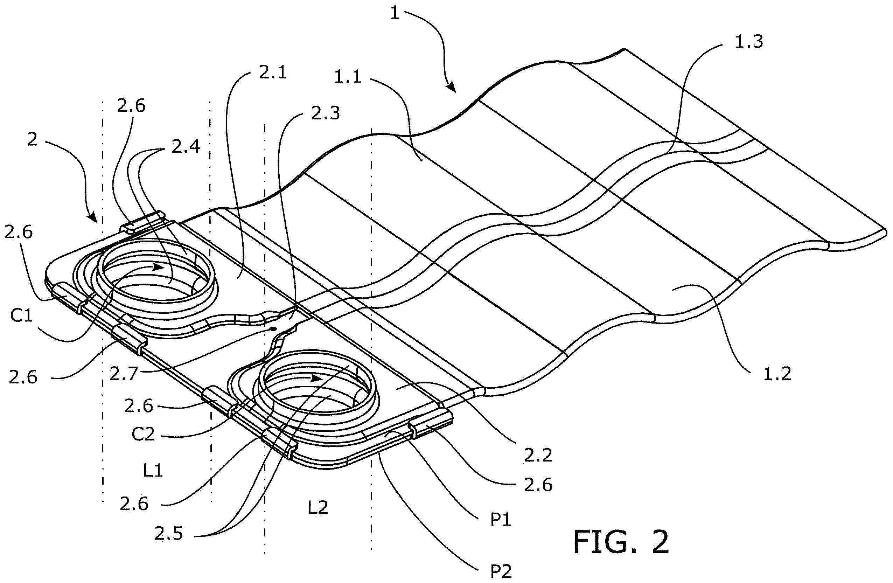

The description of the example realization of the tube (1) will show the specific junction with a manifold (2) as in Figures 2 to 6 which allows the feeding of the tube (1) at its first end (E1) from a first feed/return line (L1) and towards a second return/feed line (L2). However, this same junction of the tube (1) is possible with the manifold allowing the "U" flow at the second end (E2) where then this second end has a configuration as described at the first end (E1).

Figure 2 shows an example embodiment of a manifold (2) according to the second aspect of the invention and attached to the tube (1) described and shown in Figure 1.

The collector (2) according to this example of realization is constructed by means of two pieces of stamped sheet metal joined together which will be described below. The collector (2) has two chambers (C1, C2) made up of two separate expended chambers, a first chamber (C1) and a second chamber (C2) isolated from each other.

The chambers (C1, C2) are isolated because between the expanded region in the parts giving rise to the first chamber (C1) and the expanded region in the parts giving rise to the second chamber (C2) they are disconnected and, in particular, are connected by means of a section (2.3) free of chambers or expanded.

The first chamber (C1) is in communication with a first opening (2.1), an opening (2.1) configured to perimetrically embrace the perimeter area (1.5) of the first conduit (1.1) establishing a first junction between the tube (1) and the manifold (2). Additionally, the second chamber (C2) is in communication with a second opening (2.2), an opening (2.2) configured to peripherally embrace the perimeter area (1.5) of the second conduit (1.2) establishing a second junction between the tube (1) and the manifold (2). Both joints are disjoint so that there is no possibility of fluidic connection between the supply flow and the return flow through the joints.

Figure 2 also shows large openings (2.4, 2.5) coinciding with the expansions forming the chambers (C1), a first pair of feed openings (2.4) in the first piece (P1) and second piece (P2) respectively coinciding with the first chamber (C1) and, a second pair of return openings (2.5) in the first piece (P1) and second piece (P2) respectively coinciding with the second chamber (C2). The first pair (2.4) of openings allows the passage of a tube not shown which constitutes the first feed line (L1) and, the second pair (2.5) of openings allows the passage of a second tube not shown which constitutes the second return line (L1).

The supply line (L1) and the return line (L2), only indicated by dashed lines showing the through position of the two tubes, have perforations communicating the inside of each line (L1, L2) with its corresponding chamber (C1, C2). The configuration of the collector makes the lines (L1, L2) of supply and return, according to this example of realization are arranged essentially perpendicular to a main plane containing the median plane of the collector (2) and along which extends the tube (1) except for the oscillations due to its wavy configuration. This is because the configuration of the collector according to this embodiment is essentially flat, i.e. its thickness is also appreciably less than the other two dimensions and has a configuration extending essentially in one plane.

In the two-piece configuration of this embodiment, several joining means are included. The essential connection is by welding, in this case brazing, since it not only joins the two parts or the manifold (2) with the tube (1) but also provides the necessary sealing.

However, other alternative embodiments make use of adhesives instead of brazing-based soldering or the use of cladding sheets.

One of the additional and optional means of attachment incorporated in this embodiment is the use of tabs (2.6). In this example embodiment the second piece (P2) of the manifold shows on its periphery a plurality of tabs (2.6) generated by an extension that is bent to perimetrically embrace the first piece (P1). This allows for example a temporary joint between the first piece (P1) and the second piece (P2) during passage through the furnace in brazing.

This flanged connection (2.6) allows the connection in the outer perimeter zone but is not easy to implement in a perimeter zone of the manifold (2) that coincides with the connection to the tube (1) unless, for example, the recess (1.4) of the intermediate section (1.3) of the tube (1) is recessed to a greater degree. In this example, a clinch (2.7) has been used with the position of the punching that results in the clinch (2.7) centered on the chamber-free section (2.3) to hold the first piece (P1) and the second piece (P2) together during brazing in the furnace in the area furthest away from the flanges.

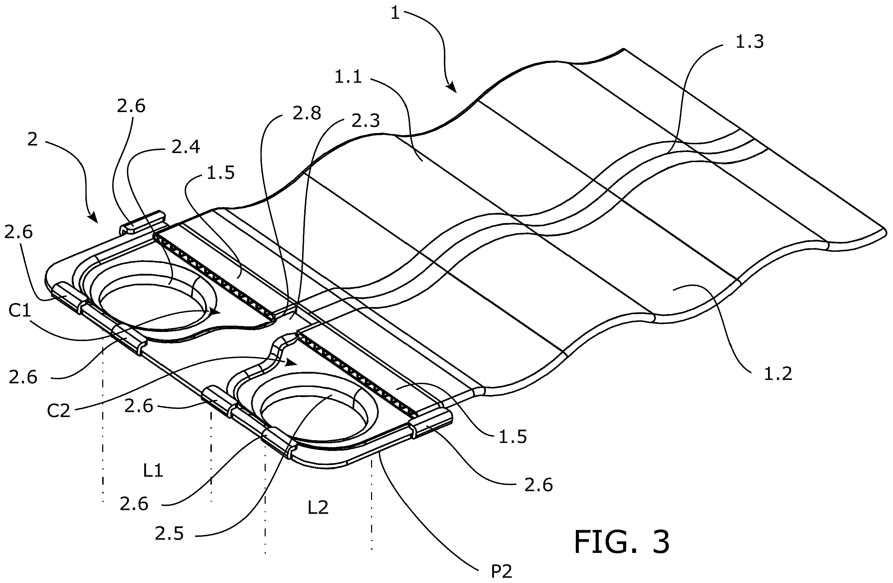

Figure 3 shows a view as shown in Figure 2 only that the first piece (P1) has been removed to have visual access to the inside of the manifold (2) and to show details of the junction between the manifold (2) and the tube (1).

In particular, the perimeter area (1.5) of the first conduit (1.1) and of the second conduit (1.2) of the tube (1) is observed where one half is in contact with the internal area of the first and second opening (2.1, 2.2) of the first piece (P1) and, the other half is in contact with the internal area of the first and second opening (2.1, 2.2) of the second piece (P2). Therefore, the areas that are joined by brazing correspond to two pieces, the perimeter area of the conduits (1.1, 1.2) of the tube (1) and the internal areas of the openings (2.1, 2.2) except for two lines, the extreme joining lines (2.8) where the first piece (P1), the second piece (P2) and the perimeter area (1.5) converge.

In these two lines the union of the first piece (P1) and the second piece (P2) pass, according to a section that cuts transversely also the first conduit (1.1) and the second conduit (1.2) partially housed in the manifold (2), from being in intimate contact two parallel surfaces to diverge in order to embrace perimetrically the perimeter area (1.5) of the tube (1). In this separation a space is established that can lead to a bad brazing joint since the molten material must fill all the space generated so that there are no sealing problems.

According to this example, this problem has been solved by carrying out a stamping of the first part (P1) and the second part (P2) between two molds so that in this region not only a bending but also a plastic deformation process is produced causing the material of one and the other part (P1, P2) to flow plastically reducing the radius according to a value less than 0.2mm and more preferably less than 0.1mm.

Under these conditions the bond lines (2.8) reduce the gap significantly so that the molten material leaves no free spaces.

In the described examples, brazing does not require the use of flux material, but the use of metal cladding plates, in particular the first piece (P1) and the second piece (P2). In this way, the faces of the plates with a lower melting temperature are the ones facing each other and therefore also the faces that come into contact with the perimeter areas (1.5) of the tube (1).

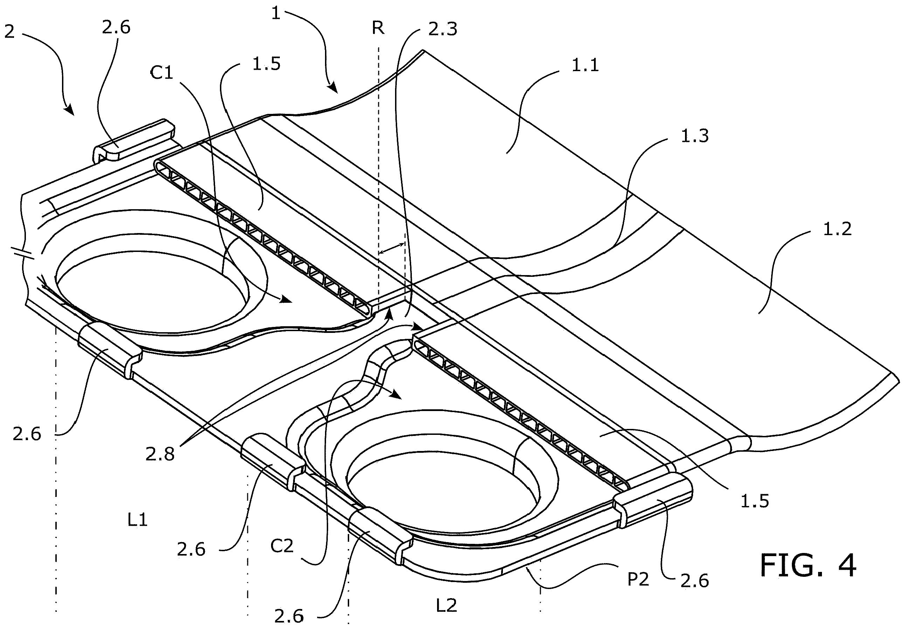

Figure 4 shows an enlargement of the zone with the joint lines (2.8) that are generated with plastic deformation. In particular it is shown with an arrow and the reference (R) how the plastic deformation zone with a smaller radius of agreement extends a length that does not reach the end of the tube (1), i.e. the plastic deformation line is distanced from the ends of the first conduit (1.1) and of the second conduit (1.2) which are housed in the first opening (2.1) and second opening (2.2) respectively to ensure that at said end there is no mechanical interference before the melting that occurs in the passage through the furnace.

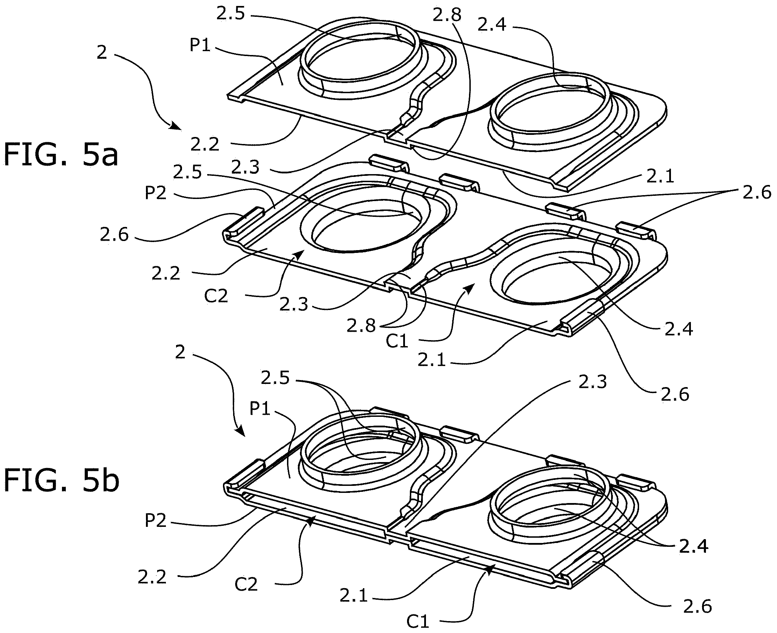

Figure 5a shows the first piece (P1) and the second piece (P2) in exploded perspective and from a point of view opposite to the previous figures to allow visual access to the interior. Figure 5b shows the same perspective orientation of the two pieces (P1, P2) only now joined together.

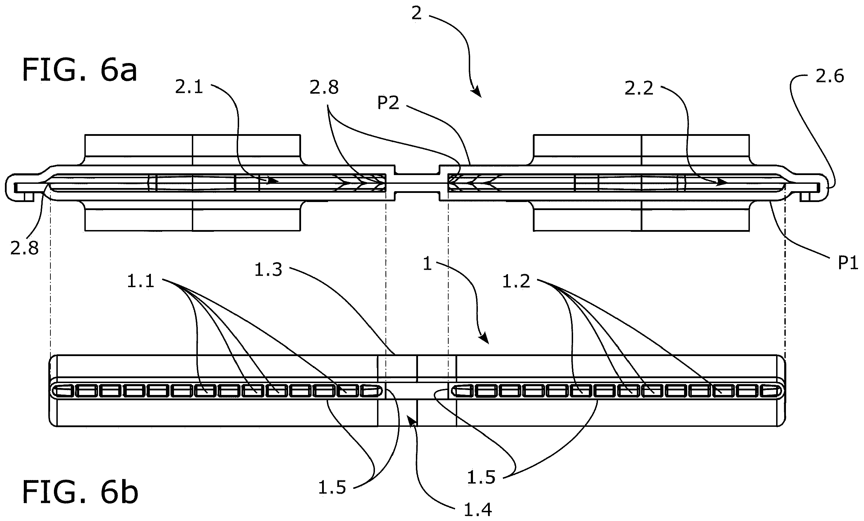

Both in these figures 5a and 5b and especially in figures 6a and 6b where the joined parts are shown viewed from the front, it is possible to observe the joint lines (2.8) of reduced radius due to the plastic deformation process.

These lines are in the inner zone coincident with the recess (1.4) since the surfaces of the recess are flat, as shown in Figure 6b, and perpendicular to the main surface of the flat tube (1). Thus, both the first piece (P1) and the second piece (P2) have a small radius of agreement at the joint lines (2.8) due to plastic deformation.

In the outer zone the ends of the tube (1) in the first conduit (1.1) and in the second conduit (1.2) are rounded as shown in the elevation of figure 6b. At these ends, as shown in figure 6a in correspondence according to the vertical direction, the second piece (P2) located below is the one with a line of union (2.8) by plastic deformation with small radius of agreement while in this example of realization it has been seen that it is not necessary to adopt this same measure in the manufacture of the first piece (P1) to ensure a good watertight joint.

The result of these joining solutions ensures a watertight and durable joint that prevents accidental or faulty existence between the first chamber (C1) and the second chamber (C2) as well as allowing a cheap manufacturing method with very few handling operations.

## Claims

1. Heat exchange tube (1) comprising:
- a first conduit (1.1) of flat configuration according to its cross section;
- a second conduit (1.2) with a flat configuration according to its cross section; wherein the first conduit (1.1) and the second conduit (1.2) are arranged adjacent and mechanically joined by means of an intermediate section (1.3) configuring a tube (1) of flat configuration according to its cross section wherein the tube (1) extends longitudinally between a first end (E1) and a second end (E2) according to a trajectory (P) and;
wherein at least one end (E1) of the tube (1) has a configuration adapted to be attached to a manifold (2) which is configured to exchange fluid with the first conduit (1.1) and with the second conduit (1.2), wherein:
- the intermediate section (1.3) has its end recessed (1.4) with respect to one end of the first conduit (1.1) and recessed (1.4) with respect to one end of the second conduit (1.2) so that the end of the first conduit (1.1) and the end of the second conduit (1.2) have a perimeter area (1.5) separated from the end of the intermediate section (1.3) and configured for connection with the manifold (2).

2. Tube (1) according to claim 1, wherein the perimeter area (1.5) is continuous along a perimeter path.

3. Tube (1) according to any one of the preceding claims, wherein the trajectory (P) of the tube (1) is either straight or wavy.

4. Tube (1) according to any one of the preceding claims, wherein the first conduit (1.1), the second conduit (1.2) or both conduits (1.1, 1.2) comprise a plurality of internal channels.

5. Tube (1) according to any of the preceding claims, where the first conduit (1.1), the second conduit (1.2) or both conduits (1.1, 1.2) have a cross section delimited by two parallel straight lines separated from each other and connected at their ends by two curved sections.

6. Manifold (2) suitable for connecting to a tube (1) according to any of the preceding claims comprising:
- at least one chamber with a first opening (2.1) with the inner surface configured to embrace the first conduit (1.1) of the tube (1) establishing contact throughout the perimeter area (1.5) of the end of said first conduit (1.1);
- at least one chamber with a second opening (2.2) with the inner surface configured to embrace the second conduit (1.1) establishing contact throughout the perimeter area (1.5) of the end of said second conduit (1.2).

7. Collector (2) according to claim 6, wherein the chamber with a first opening (2.1) is a first chamber (C1) and the chamber with a second opening (2.2) is a second chamber (C2), the first chamber (C1) and the second chamber (C2) being fluidly incommunicable with each other and wherein:
- the first chamber (C1) is in communication with a first feed/return line (L1) and,
- the second chamber (C2) is in fluidic communication with a second return/feed line (L2).

8. Manifold (2) according to claim 7, wherein the main body of the manifold (2) is configured in stamped sheet metal according to a first stamped part (P1) and a second stamped part wherein in the first part (P1) is configured:
- part of the first opening (2.1) and part of the inner surface which is configured to be in contact with the perimeter area (1.5) of the end of the first conduit (1.1) and,
- part of the second opening (2.2) and part of the inner surface that is configured to be in contact with the perimeter area (1.5) of the end of the second conduit (1.2);
and in the second part (P2) is configured:
- part of the first opening (2.1) and part of the inner surface which is configured to be in contact with the perimeter area (1.5) of the end of the first conduit (1.1) and,
- part of the second opening (2.2) and part of the inner surface that is configured to be in contact with the perimeter area (1.5) of the end of the second conduit (1.2).

9. Manifold (2) according to claim 8, wherein between the first chamber (C1) and the second chamber (C2) there is a section where the first piece (P1) and the second piece (P2) are joined by a section (2.3) free of chambers or expansions.

10. Manifold (2) according to any of the claims 8 or 9, wherein the first piece (P1) and the second piece (P2) are made of cladding, preferably of aluminum, and joined by partial melting in a furnace.

11. Manifold (2) according to any of claims 8 to 10, wherein the stamping of the first piece (P1) and the second piece (P2) is with plastic deformation such that the joint between both pieces (P1, P2) in a region of the inner surface which is configured to be in contact with the perimeter area (1.5) of the first conduit (1.1) or of the second conduit (1.2) such that the radius of agreement of one and the other piece is less than 1mm, more preferably less than 0.5mm, more preferably less than 0.2mm, more preferably less than 0.1mm.

12. Manifold (2) according to any of the preceding claims wherein the first part (P1) and the second part (P2) are joined together:
- by "clinching" or punching with permanent deformation;
- by tabs emerging from one piece (P1, P2) and bent towards the other piece (P2, P1) or,
- for both.

13. heat exchange module comprising:
- a heat exchange tube (1) according to any one of claims 1 to 5;
- a manifold (2) according to any one of claims 6 to 12;
where
- the perimeter area (1.5) of the first conduit (1.1) of the tube (1) is attached to an inner area of the first opening (2.1) of the manifold (2);
- the perimeter area (1.5) of the second conduit (1.2) of the tube (1) is attached to an inner area of the second opening (2.2) of the manifold (2).

14. Method of manufacturing a manifold (2) comprising the following stages:
- stamping a first part (P1) and a second part (P2) configured according to any one of claims 8 to 11 and with tabs according to claim 12;
- place the first piece (P1) and the second piece (P2) together in their final position;
- bend the tabs holding the parts (P1, P2) together while the first conduit (1.1) of the tube (1) is inserted into the first opening (2.1) of the manifold (2) and the second conduit (1.2) of the tube (1) is inserted into the second opening (2.2) in its final position for joining the two parts (P1, P2) and the tube (1) temporarily;
- optionally carry out clinching between the parts (P1, P2);
- subjecting the temporarily joined parts (P1, P2, 1) to temperature for a time, the melting temperature of the flux material, either by a layer of a "cladding sheet" or by the addition of brazing paste, until soldering is established on the joined parts .
